# EUROPÄISCHE PATENTSCHRIFT

(11) **EP 0 510 350 B1**
(45) Veröffentlichungstag und Bekanntmachung des Hinweises auf die Patenterteilung: **06.09.1995**
(21) Anmeldenummer: 92104541.5
(22) Anmeldetag: 17.03.1992
(51) Int. Cl.: F16F 9/43

(54) **Verfahren und Vorrichtung zum Entfernen der Dämpfungsflüssigkeit aus einem Schwingungsdämpfer und Schwingungsdämpfer dafür**
Method and apparatus for removal of damping fluid from a vibration damper and vibration damper therefor
Procédé et dispositif pour l'élimination de liquide d'amortissement d'un amortisseur de vibrations et l'amortisseur pour cela

(30) Priorität: 25.04.1991 DE 4113460
(43) Veröffentlichungstag der Anmeldung: 28.10.1992
(73) Patentinhaber: AUGUST BILSTEIN GMBH & CO. KG, 58240 Ennepetal (DE)
(72) Erfinder: Wörmann, Thomas, Dipl.-Ing., W-5600 Wuppertal 1 (DE)

(56) Entgegenhaltungen:
- EP-A- 0 257 682
- DE-A- 2 027 152
- GB-A- 2 153 449
- US-A- 3 990 488

## Beschreibung

Die Erfindung betrifft eine Vorrichtung zum Entfernen der unter Druck stehenden Dämpfungsflüssigkeit aus Schwingungsdämpfern, insbesondere von Kraftfahrzeugen und einem Schwingungsdämpfer dafür.

Die Wirksamkeit eines Schwingungsdämpfers hängt im wesentlichen von dem Widerstand ab, welchen die durch kleine Durchschnittsquerschnitte hindurchtretende, nicht komprimierbare Dämpfungsflüssigkeit entwickelt. Aus diesem Grund werden an die Dämpfungsflüssigkeit hohe Anforderungen hinsichtlich bestimmter Eigenschaften, wie Schmierung, Viskosität-Temperatur-Verhalten, Emulgationsvermögen, Reibungsminderung und Dichtungsverträglichkeit gestellt. Zur Erreichung dieser Anforderungen enthalten diese Flüssigkeiten oft sehr giftige Zusätze.

Damit steht die Forderung für die Automobilindustrie diese Flüssigkeiten aufzufangen und zu vernichten oder der Wiederaufarbeitung zuzuführen.

Eine Vorrichtung zur Wiederaufarbeitung bzw. zur Neubefüllung von gebrauchten Stoßdämpfern zeigt die US-PS 3 990 488, bei der mit einem mechanischem Mittel, hier einem Bohrer, zwei Löcher in den Zylinder des Stoßdämpfers eingebracht werden wonach das Öl innerhalb des Dämpfers durch entsprechendes Drehen desselben bzw. durch eine Kolbenbewegung herausgedrückt werden kann.

Hierbei besteht der Nachteil, daß eine vollständige Entleerung des gesamten Systems mit seinen unterschiedlichen Arbeitsräumen und Kammern fraglich ist und eine sichere und kontrollierte Entsorgung bei z.B. unter Hochdruck stehenden Dämpfern nicht möglich ist.

Die Aufgabe der Erfindung, besteht darin, eine Vorrichtung zum Entfernen und Auffangen der unter Druck stehenden Dämpfungsflüssigkeit eines Schwingungsdämpfers zu schaffen, wobei die Vorrichtung einen einfachen und platzsparenden Aufbau aufweisen soll und damit in Werkstätten und in Shredderfirmen einsetzbar ist.

Die Lösung der Aufgabe erfolgt durch die kennzeichnenden Merkmale der Patentansprüche.

Hierbei wird die Dämpfungsflüssigkeit aus einem Schwingungsdämpfer durch eine oder mehrere Öffnungen entfernt, welche mechanisch in den Schwingungsdämpfer eingebracht werden. Der Schwingungsdämpfer wird dabei in einer Vorrichtung gehalten, die Öffnungen werden in den Zylinder, das Bodenteil oder den Führungsverschluß eingebracht und die Dämpfungsflüssigkeit wird kontrolliert abgeführt.

Durch die Halterung in einer besonders ausgebildeten Vorrichtung, welche die Möglichkeit vorsieht, durch die gesetzten Bohrungen unterschiedlichen Arbeits- und Druckräume des Dämpfersystemes zu erreichen, wird eine gesicherte und ungefährliche Entsorgung der Hydraulikflüssigkeit erreicht.

Vorteilhafterweise werden die Bohrungen so gesetzt, daß entweder durch die Schwerkraft oder durch den Gasdruck im Ausgleichsraum der Auslaufvorgang unterstützt wird. Bei Gasdruckstoßdämpfern gestaltet sich hiernach das Auslaufen des Hydraulikmediums besonders einfach.

Ein ähnlich vorteilhaftes Verfahren ergibt sich, wenn durch eine weitere Öffnung Druckluft in die unterschiedlichen Arbeitsräume eingeführt wird und dadurch das Hydraulikmedium restlos ausgepreßt werden kann.

Ein erfindungsgemäßer Schwingungsdämpfer wird demzufolge durch mechanische Mittel mit einer oder mehreren Öffnungen im Zylinder, im Boden oder im Führungsverschluß versehen, wonach die über Gasdruck vorgespannte Dämpfungsflüssigkeit kontrolliert über die erfindungsgemäße Vorrichtung abgeführt wird.

Insbesondere vorteilhaft ist es, bei der Herstellung der Schwingungsdämpfer Sollbruchstellen oder Rückschlagsventile in der Zylinderwandung oder dem Führungsverschluß vorzusehen, durch die das Werkzeug leicht die Wandung durchstoßen kann. Der Kanal zum Abführen des unter Druck stehenden Dämpfungsmedium befindet sich vorteilhafterweise im Werkzeug. Ist das Werkzeug ein Bohrer, werden die Spanabführungsnuten als Abführungskanal genutzt.

Der Werkzeugantrieb kann sowohl elektrisch als auch, insbesondere bei Verwendung eines Hohldorns, durch Einwirkung einer mechanischen Kraft erfolgen.

Durch den unkomplizierten und platzsparenden Aufbau ist die Vorrichtung leicht handhabbar und kann auch in kleineren Werkstätten oder Service-Stationen zum Einsatz kommen.

Die Erfindung soll anhand mehrerer Ausführungsbeispiele näher erläutert werden. Die zugehörigen Zeichnungen zeigen:
- Fig. 1: Vorrichtung mit Kohldorn zum Entfernen der Dämpfungsflüssigkeit bei einem Zweirohrschwingungsdämpfer
- Fig. 2: Vorrichtung mit Spiralbohrer zum Entfernen der Dämpfungsflüssigkeit bei einem Zweirohrschwingungsdämpfer
- Fig. 3: Vorrichtung für einen Einrohrschwingungsdämpfer zur Entsorgung über die seitliche Zylinderwandung
- Fig. 4 a: Schwingungsdämpfer mit Rückschlagventil oder Sollbruchstelle im Führungsverschluß der Kolbenstange

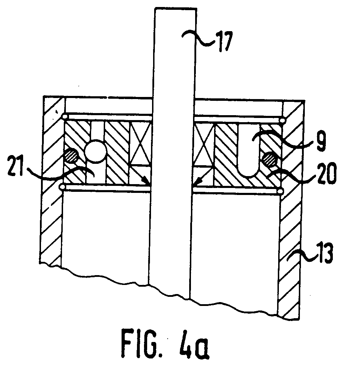

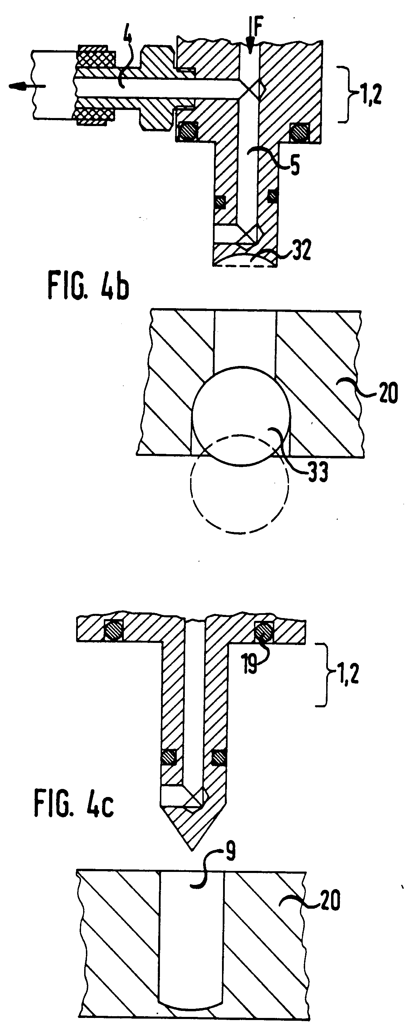

- Fig. 4 b: Werkzeug zum Entsorgen für Schwingungsdämpfer mit Rückschlagventil
- Fig. 4 c: Werkzeug zum Entsorgen für Schwingungsdämpfer mit Sollbruchstelle

Schwingungsdämpfer für Kraftfahrzeuge bestehen aus einem mit Dämpfungsflüssigkeit gefüllten Zylinder 13 und einem den Zylinderraum in zwei Arbeitsräume 14, 15 unterteilenden, mit der Kolbenstange 17 verbundenen Dämpfungskolben 16 und einem unterschiedlich anordbaren, mit Gas gefüllten Ausgleichsraum 18, wobei die Dämpfungsflüssigkeit im Zylinder unter Druck steht.

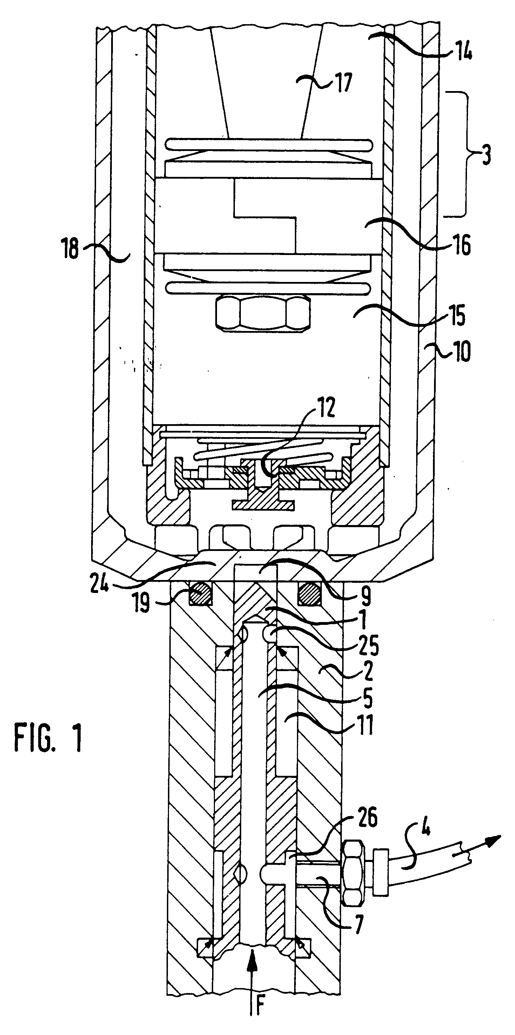

Bei dem in Fig. 1 gezeigten Zweirohrschwingungsdämpfer 3 befindet sich der Ausgleichsraum 18 zwischen einem Dämpfungszylinder und den Außenzylinder.

Die Vorrichtung zum Entfernen der Dämpfungsflüssigkeit besteht aus einer zylinderförmig ausgebildeten Werkzeughalterung 2, die auf das Bodenteil der Zylinderwandung 10 des Schwingungsdämpfers 3 abdichtend aufgesetzt wird. Die Abdichtung kann zum Beispiel mit einer Ringdichtung 19 erfolgen. Da der im Beispiel gezeigte Schwingungsdämpfer eine Sollbruchstelle 9 aufweist, wird in der rohrförmig hohlen Werkzeughalterung 2 als Werkzeug 1 ein Hohldorn geführt, dessen Spitze derart ausgebildet ist, daß er nach Durchbruch des Bodenteils der Zylinderwandung 10 das eine Verbindung zwischen Dämpfungszylinder und Außenzylinder herstellende Bodenventil 12 anhebt, so daß die Dämpfungsflüssigkeit unter Einfluß der Schwerkraft aus den Arbeitsräumen 14, 15 abgeführt wird, wobei gegebenenfalls zur Unterstützung über eine eingebrachte Öffnung, zum Beispiel im Führungsverschluß, Luft eingeführt wird. Der Ausgleichsraum 18 wird mit Hilfe des im Ausgleichsraum befindlichen Gasdrucks entleert. Zur Weiterleitung der Dämpfungsflüssigkeit weist das Werkzeug 1 einen Abführungskanal 5 auf, der nach dem Durchdringen der Zylinderwandung 10 mit dem Zylinderraum über eine seitliche Bohrung 25 in Verbindung steht.

Die aus dem Schwingungsdämpfer 3 dringende Dämpfungsflüssigkeit wird über eine weitere seitliche Bohrung 26 im Werkzeug, die mit einem Durchlaß 7 in der Werkzeughalterung 2 jetzt in Verbindung steht und einen weiteren mit der Werkzeughalterung verbundenen Abführungskanal 4 abgeleitet. Das kann zum Beispiel ein an der Werkzeughalterung 2 befestigter Abführschlauch sein.

Das als Hohldorn ausgebildete Werkzeug 1 wird an dem auf dem Schwingungsdämpfer 3 aufgesetzten Ende und außerhalb des Durchlasses 7 in der Werkzeughalterung abdichtend geführt.

Die Werkzeugbewegung wird auf einfache Weise durch die Einwirkung einer mechanischen Kraft F realisiert.

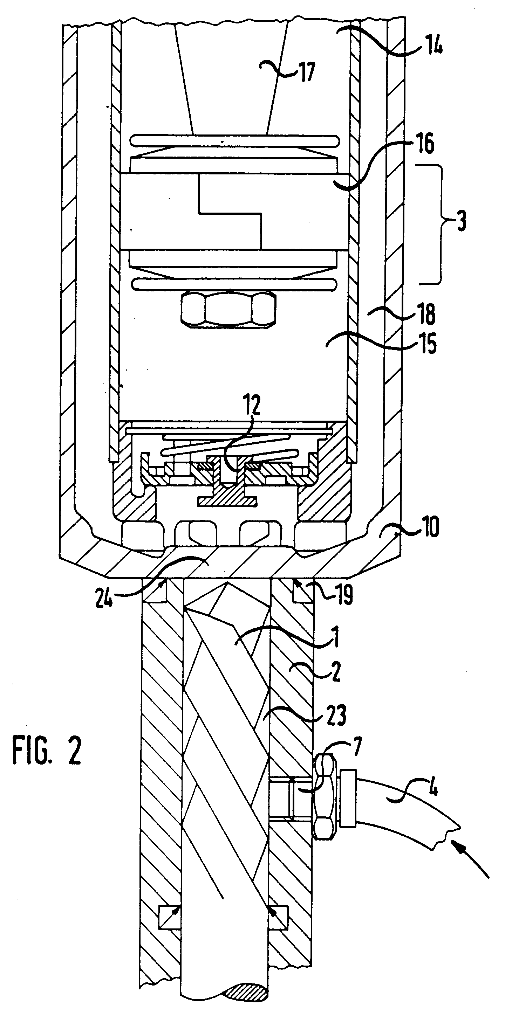

Fig. 2 zeigt eine Vorrichtung zum Entfernen der Dämpfungsflüssigkeit bei einem nicht vorbereiteten Zweirohr-Schwingungsdämpfer.

Die Werkzeughalterung 2 wird ebenfalls wie in Fig. 1 gezeigt auf das Bodenteil der Zylinderwandung 10 des Schwingungsdämpfers 3 abdichtend aufgesetzt. Als Werkzeug 1 wird ein mit einem nicht dargestellten elektrischen Werkzeugantrieb versehener Spiralbohrer verwendet, dessen Spanabführungsnuten 23 gleichzeitig als Abführungskanal 4 dienen. Das Werkzeug 1 wird nur unterhalb des Durchlasses 7 gegenüber der Werkzeughalterung 2 abdichtend geführt.

Die Spitze des Werkzeuges ist hier ebenfalls so ausgebildet, daß nach dem Durchdringen der Zylinderwandung 10 das Bodenventil 12 angehoben werden kann und die Dämpfungsflüssigkeit aus dem Arbeitsräumen 14, 15 mittels Schwerkraft herausfließt. Zur Ableitung aus dem Ausgleichsraum 18 wird auch hier der in ihm herrschende Gasdruck verwendet. Über die Spanabführungsnuten 23 und dem mit dem Durchlaß 7 verbundenen Abführungskanal 4 fließt die Dämpfungsflüssigkeit in eine nicht dargestellte Auffangeinrichtung, die einen Filter zum Abfangen der Bohrspäne enthält.

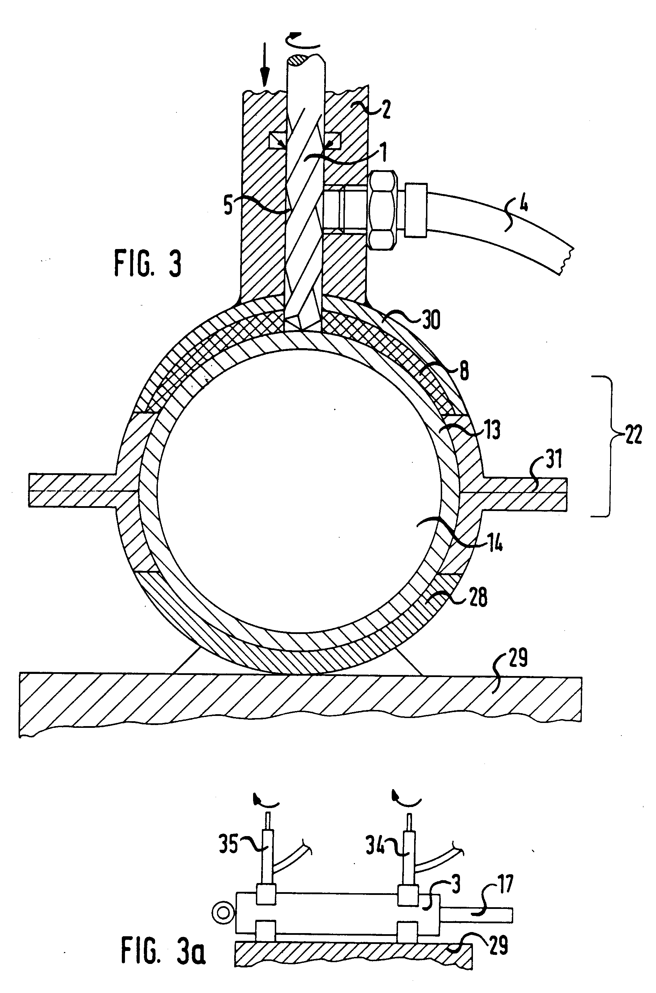

Fig. 3 zeigt eine einfache Vorrichtung für einen nichtvorbereiteten Einrohr-Schwingungsdämpfer. Bei einem Einrohr-Schwingungsdämpfer 3 werden zum Beispiel die Öffnungen 36 zum Entfernen der Dämpfungsflüssigkeit in die seitliche Wandung des Zylinders 13 eingebracht, wobei es günstig ist, den Arbeitsraum 14 zu öffnen, um unter Ausnutzung des Gasdrucks im Ausgleichsraum die Dämpfungsflüssigkeit aus beiden Arbeitsräumen abzuleiten.

Dazu wird der Schwingungsdämpfer 3 in eine den Zylinder 13 festumschließende Halteeinrichtung 22 gelegt, dessen Unterteil 28 mit einer Grundplatte 29 fest verbunden ist. Das Oberteil 30 bildet mit der Werkzeughalterung 2 eine Einheit, wobei zwischen beiden zur Abdichtung der Öffnung 36 eine Dichtung 8 angeordnet ist. Nach dem Einlegen des Schwingungsdämpfers wird die Einspanneinrichtung zum Beispiel über Schellen 31 abdichtend geschlossen. Als Werkzeug 1 wird wie in Fig. 2 ein in der Werkzeughalterung 2 abdichtend geführter Spiralbohrer verwendet.

Nach der vollständigen Ableitung der Dämpfungsflüssigkeit ist noch ein Teil des Gases aus dem Ausgleichsraum im Zylinder 13 vorhanden, zu dessen Abführung eine weitere erfinderische Vorrichtung 35 in Höhe des Ausgleichsraumes auf den Zylinder des Schwingungsdämpfers 3 aufgesetzt wird und mit Hilfe der am Arbeitsraum 14 angeordneten Vorrichtung 34 Druckluft eingeleitet und das Restgas herausgepreßt wird. (Fig. 3a)

Eine vorteilhafte Variante zum Entfernen des Dämpfungsmediums aus einem Schwingungsdämpfer besteht darin, im Führungsverschluß 20 des Zylinders 13 eine Sollbruchstelle 9 oder ein Rückschlagventil 21 vorzusehen. Fig. 4a zeigt beide Varianten.

Zum Entfernen des Rückschlagventils 21 im Führungsverschluß weist, wie Fig. 4b zeigt, das Werkzeug 1 zum Durchdringen der Zylinderwandung 10 eine Spitze 32 auf, die der Form der Stahlkugel 33 entspricht. Mit Hilfe einer mechanischen Kraft F auf das Werkzeug 1 wird die Kugel herausgepreßt und die Dämpfungsflüssigkeit kann über die Abführungskanäle 5, 4 abgeleitet werden. Wegen des geringen Platzes am Führungsverschluß 20 zum Aufsetzen der Werkzeughalterung 2 ist diese im Werkzeug 1 integriert. Die Einheit aus Werkzeughalterung und Werkzeug weist zur Abdichtung der in den Schwingungsdämpfer 3 einzubringenden Öffnung nach außen eine Ringdichtung 19 auf.

Fig. 4c zeigt das Werkzeug 1 zum Durchdringen der Sollbruchstelle 9 im Führungsverschluß 20, bei dem ebenfalls die Werkzeughalterung 2 mit dem Werkzeug 1 eine Einheit gebildet.

## Patentansprüche

1. Verfahren zum Entfernen der Dämpfungsflüssigkeit aus einem Schwingungsdämpfer, wobei in den Schwingungsdämpfer durch mechanische Mittel eine oder mehrere Öffnungen eingebracht werden dadurch gekennzeichnet, daß der Schwingungsdämpfer in einer Vorrichtung gehalten wird, die Öffnungen in den Zylinder, das Bodenteil oder den Führungsverschluß eingebracht werden und die Dämpfungsflüssigkeit kontrolliert abgeführt wird.

2. Verfahren nach Anspruch 1, dadurch gekennzeichnet, daß die Dämpfungsflüssigkeit unter Einwirkung der Schwerkraft und/oder des Gasdruckes im Ausgleichsraum des schwingungsdämpfers abgeführt wird.

3. Verfahren nach Anspruch 1, dadurch gekennzeichnet, daß in dem Zylinder (13), dem Bodenteil (24) oder den Führungsverschluß (20) eine weitere Öffnung eingebracht wird und zur Abführung der Dämpfungsflüssigkeit und/oder dem Gas im Ausgleichsraum (18) Druckluft zugeführt wird.

4. Schwingungsdämpfer zur Durchführung des Verfahrens nach den Ansprüchen 1 bis 3, bestehend aus einem mit Dämpfungsflüssigkeit gefüllten Dämpferzylinder, einem sich im Dämpferzylinder hin- und herbewegenden, mit einer Kolbenstange verbundenen Dämpfungskolben und einen mit Gas gefüllten Ausgleichsraum, dadurch gekennzeichnet, daß an den Stellen, an denen Öffnungen für die Entfernung der Dämpfungsflüssigkeit eingebracht werden sollen, die Zylinderwandung (13) eine örtlich ausgedünnte Wandstärke (9) aufweist.

5. Schwingungsdämpfer zur Durchführung des Verfahrens nach den Ansprüchen 1 bis 3, bestehend aus einem mit Dämpfungsflüssigkeit gefüllten Dämpferzylinder, einem sich im Dämpferzylinder hin- und herbewegenden, mit einer Kolbenstange verbundenen Dämpfungskolben und einen mit Gas gefüllten Ausgleichsraum, dadurch gekennzeichnet, daß als Öffnungen für die Entfernung der Dämpfungsflüssigkeit in die Zylinderwandung (10) Rückschlagventile (21) eingesetzt sind.

6. Schwingungsdämpfer nach Anspruch 5, dadurch gekennzeichnet, daß die Rückschlagventile (21) in den Führungsverschluß (20) des Zylinders (10) eingesetzt sind.

7. Vorrichtung zur Durchführung des Verfahrens nach den Ansprüchen 1 bis 3, dadurch gekennzeichnet, daß die Vorrichtung aus einer Haltevorrichtung (22), einem Werkzeug (1) zum Durchdringen der Zylinderwandung (10) des Schwingungsdämpfers (3), das in einer Werkzeughalterung (2) geführt ist, und einem Werkzeugantrieb besteht, wobei das Werkzeug (1) einen ersten Abführungskanal (5) aufweist, der mit einem zweiten aus der Vorrichtung herausgeführten Abführungskanal (4) in Verbindung steht, und das Werkzeug (1) unterhalb des zweiten Ölabführungskanals (4) im Werkzeugführungskanal (11) abdichtend geführt ist und die Werkzeughalterung (2) gegenüber der Zylinderwandung (10) des Schwingungsdämpfers (3) abdichtbar ist.

8. Vorrichtung nach Anspruch 7, dadurch gekennzeichnet, daß das Werkzeug (1) ein Bohrer ist, dessen Spanabführungsnuten (23) gleichzeitig als Abführungskanal (5) dienen.

9. Vorrichtung nach Anspruch 7, dadurch gekennzeichnet, daß das Werkzeug (1) zum Durchdringen der Zylinderwandung (10) bei örtlich ausgedünnter Wandstärke (9) als Hohldorn ausgebildet ist.

10. Vorrichtung nach Anspruch 8 oder 9, dadurch gekennzeichnet, daß das Werkzeug (1) für die Verwendung bei einem Zweirohr-Schwingungsdämpfer, derart ausgebildet ist, daß nach dem Durchdringen der Zylinderwandung (10) das Bodenventil (12) angehoben wird.

11. Vorrichtung nach einem oder mehreren der Ansprüche 7 bis 10, dadurch gekennzeichnet, daß das Werkzeug 1 bei der Entfernung der Dämpfungsflüssigkeit über ein Rückschlagventil (21) rohrförmig ausgebildet ist und die Rückschlagsperre vom Ventilsitz abhebt.

12. Vorrichtung nach einem oder mehreren der Ansprüche 7 bis 11, dadurch gekennzeichnet, daß die Werkzeughalterung 2 und das Werkzeug 1 eine Einheit bilden, die zur Abdichtung der in dem Schwingungsdämpfer (3) einzubringenden Öffnung nach außen eine Dichtung (19) aufweist.

13. Vorrichtung nach einem oder mehreren der Ansprüche 7 bis 12, dadurch gekennzeichnet, daß eine weitere gleiche Vorrichtung (35) auf den Zylinder (13) des Schwingungsdämpfers (3) aufgesetzt wird und nach dem Durchdringen der Zylinderwandung (10) der Abführungskanal (5) der Vorrichtung (35) mit Druckluft beaufschlagt wird.

## Claims

1. Method for the removal of damping fluid from a vibration damper, wherein one or a plurality of orifices are provided in the vibration damper by mechanical means, characterised in that the vibration damper is held in a device, orifices are provided in the cylinder, the base part or the guide seal and furthermore the damping fluid is carried away in a controlled manner.

2. Method according to claim 1, characterised in that the damping fluid is carried away under the influence of the gravitational force and/or of the gas pressure in the compensating chamber of the vibration damper.

3. Method according to claim 1, characterised in that a further orifice is provided in the cylinder (13), the base part (24) or the guide seal (20) and compressed air is introduced for the purpose of carrying off the damping fluid and/or the gas in the compensating chamber (18).

4. Vibration damper for carrying out the method according to claims 1 to 3, comprising a damping cylinder filled with a damping fluid, a damping piston, which moves to and fro in the damping cylinder and is connected to a piston rod, and a compensating chamber filled with gas, characterised in that at the points where orifices for removing the damping fluid are to be provided, the cylinder wall (13) has a localised thinning of the wall thickness (9).

5. Vibration damper for carrying out the method according to claims 1 to 3, comprising a damping cylinder filled with a damping fluid, a damping piston, which moves to and fro in a damping cylinder and is connected to a piston rod, and a compensating chamber filled with gas, characterised in that non-return valves (21) are fitted in the cylinder wall (10) as orifices for the removal of the damping fluid.

6. Vibration damper according to claim 5, characterised in that the non-return valves (21) are fitted in the guide seal (20) of the cylinder (10).

7. Apparatus for carrying out the method according to claims 1 to 3, characterised in that the apparatus comprises a holding device (22), a tool (1) for penetrating the cylinder wall (10) of the vibration damper (3), the said tool being guided in a tool holding device (2), and a tool drive and the tool (1) has a first outlet channel (5) which is connected to a second outlet channel (4) issuing from the apparatus and the tool (10) is sealingly guided in the tool guide channel (11) below the second oil outlet channel (4) and the tool holding device (2) can be sealed with respect to the cylinder wall (10) of the vibration damper (3).

8. Apparatus according to claim 7, characterised in that the tool (1) is a drill bit, whose chip disposal grooves (23) serve simultaneously as outlet channels (5).

9. Apparatus according to claim 7, characterised in that the tool (1) is designed as a hollow mandrel for the purpose of penetrating the cylinder wall (10) with the localized thinning of the wall thickness (9).

10. Apparatus according to claims 8 or 9, characterised in that the tool (1) is designed for use with a two-pipe vibration damper in such a way that once the cylinder wall (10) has been penetrated, the base valve (12) is raised.

11. Apparatus according to any one or several of claims 7 to 10, characterised in that tool (1) is of a tubular design when removing the damping fluid by way of a non-return valve (21) and the non-return flap is raised from the valve seat.

12. Apparatus according to any one or several of claims 7 to 11, characterised in that the tool holding device (2) and the tool (1) form one unit, which has a seal (19) towards the outside for the purpose of sealing the orifice which is to be provided in the vibration damper (3).

13. Apparatus according to any one or several of claims 7 to 12, characterised in that a further identical apparatus (35) is attached to the cylinder (13) of the vibration damper (3) and once the cylinder wall (10) has been penetrated, the outlet channel (5) of the apparatus (35) is charged with compressed air.

## Revendications

1. Procédé d'extraction du liquide d'amortissement d'un amortisseur, dans lequel une ou plusieurs ouvertures sont formées dans l'amortisseur par des moyens mécaniques, caractérisé en ce que l'amortisseur est maintenu dans un dispositif, les ouvertures sont formées dans le cylindre, la pièce de base ou la fermeture de guidage, et le liquide d'amortissement est extrait de manière contrôlée.

2. Procédé selon la revendication 1, caractérisé en ce que le liquide d'amortissement est amené dans l'enceinte d'équilibrage de l'amortisseur sous l'action de la pesanteur et/ou de la pression du gaz.

3. Procédé selon la revendication 1, caractérisé en ce qu'une autre ouverture est pratiquée dans le cylindre (13), la pièce de base (24) ou la fermeture de guidage (20), et en ce que de l'air comprimé est amené dans l'enceinte d'équilibrage (18) pour extrait le liquide d'amortissement et/ou le gaz.

4. Amortisseur pour la mise en oeuvre du procédé selon les revendications 1 à 3, constitué d'un cylindre d'amortisseur rempli d'un liquide d'amortissement, d'un piston d'amortissement relié à une tige de piston et se déplaçant dans un sens et dans l'autre dans le cylindre d'amortisseur, et d'une enceinte d'équilibrage remplie de gaz, caractérisé en ce que, aux endroits où doivent être pratiquées des ouvertures destinées à l'extraction du liquide d'amortissement, la paroi (13) du cylindre présente une épaisseur (9) de paroi localement amincie.

5. Amortisseur pour la mise en oeuvre du procédé selon les revendications 1 à 3, constitué d'un cylindre d'amortisseur rempli de liquide d'amortissement, d'un piston d'amortissement relié à une tige de piston et se déplaçant dans un sens et dans l'autre dans le cylindre d'amortisseur, et d'une enceinte d'équilibrage remplie de gaz, caractérisé en ce qu'il comprend des soupapes de retenue (21) comme ouvertures d'extraction du liquide d'amortissement dans la paroi (10) du cylindre.

6. Amortisseur selon la revendication 5, caractérisé en ce que les soupapes de retenue (21) sont disposées dans la fermeture de guidage (20) du cylindre (10).

7. Dispositif pour la mise en oeuvre du procédé selon les revendications 1 à 3, caractérisé en ce que le dispositif comprend un dispositif de maintien (22), un outil (1) destiné à percer la paroi (10) du cylindre de l'amortisseur (3) et guidé dans un porte-outil (2), ainsi qu'un entraînement d'outil, l'outil (1) présentant un premier canal d'extraction (5) relié à un second canal d'extraction (4) se prolongeant hors du dispositif, et l'outil (1) étant guidé de manière étanche en-dessous du second canal d'extraction d'huile (4), dans le canal (11) de guidage de l'outil, et le porte-outil (2) pouvant être étanchéifié par rapport à la paroi (10) du cylindre d'amortisseur (3).

8. Dispositif selon la revendication 7, caractérisé en ce que l'outil (1) est un foret dont les rainures (23) d'extraction des copeaux servent en même temps de canal d'extraction (5).

9. Dispositif selon la revendication 7, caractérisé en ce que l'outil (1) est configuré en forme d'aiguille creuse pour percer la paroi (10) du cylindre là où l'épaisseur (9) de la paroi est localement amincie.

10. Dispositif selon la revendication 8 ou 9, caractérisé en ce que l'outil (1) destiné à être utilisé pour un amortisseur à double cylindre est configuré de manière à ce que le clapet de pied (12) soit relevé après le percement de la paroi (10) du cylindre.

11. Dispositif selon l'une ou plusieurs des revendications 7 à 10, caractérisé en ce que l'outil (1) est de forme tubulaire, et écarte le clapet de la soupape de son siège, pour l'extraction du liquide d'amortissement par l'intermédiaire d'une soupape de retenue (21).

12. Dispositif selon l'une ou plusieurs des revendications 7 à 11, caractérisé en ce que le porte-outil (2) et l'outil (1) forment une unité qui présente à l'extérieur un joint d'étanchéité (19) servant à étanchéifier l'ouverture à pratiquer dans l'amortisseur (3).

13. Dispositif selon l'une ou plusieurs des revendications 7 à 12, caractérisé en ce qu'un autre dispositif (35) semblable est placé sur le cylindre (13) de l'amortisseur (3), et en ce que le canal d'extraction (5) du dispositif (35) est alimenté en air comprimé après le percement de la paroi (10) du cylindre.
